# EUROPÄISCHE PATENTSCHRIFT

(11) **EP 3 758 646 B1**
(45) Veröffentlichungstag und Bekanntmachung des Hinweises auf die Patenterteilung: **11.10.2023**
(21) Anmeldenummer: 19712142.9
(22) Anmeldetag: 28.02.2019
(51) Int. Cl.: A61C 15/04

(54) **ZAHNREINIGUNGSSYSTEM, GRUNDKÖRPER SOWIE HALTERUNG FÜR ZAHNSEIDE**
DENTAL CLEANING SYSTEM, BASE AND HOLDER FOR DENTAL FLOSS
SYSTÈME DE NETTOYAGE DE DENTS, CORPS DE BASE AINSI QUE SUPPORT DU FIL DENTAIRE

(30) Priorität: 01.03.2018 DE 102018104695; 13.12.2018 JP 2018233534
(43) Veröffentlichungstag der Anmeldung: 06.01.2021
(73) Patentinhaber: GSTS Innovation GmbH, 86415 Mering (DE)
(72) Erfinder: GIBISCH, Stefan Josef, 86415 Mering (DE); SCHAEFER, Tomás Alberto Joachim, 84405 Dorfen (DE)
(74) Vertreter: Canzler & Bergmeier Patentanwälte Partnerschaft mbB
(86) Internationale Anmeldenummer: PCT/EP2019/055074
(87) Internationale Veröffentlichungsnummer: WO 2019/166593

(56) Entgegenhaltungen:
- WO-A1-2004/087001
- US-A- 5 222 510
- US-A- 5 881 745
- US-A- 6 065 480
- US-A1- 2005 133 058
- US-A1- 2011 186 074

## Beschreibung

Die vorliegende Erfindung betrifft ein Zahnreinigungssystem mit einer Halterung für Zahnseide, die zwei voneinander beabstandete Schenkel und eine zwischen den beiden Schenkeln gehaltene Zahnseide aufweist, und mit einem ringförmigen Grundkörper zum Aufschieben auf einen Finger, welcher eine in Längsrichtung des Grundkörpers angeordnete Aussparung zur Aufnahme einer Fingerspitze aufweist. Solches Zahnreinigungssystem ist im Anspruch 1 definiert.

Ferner betrifft die Erfindung einen Grundkörper für ein Zahnreinigungssystem, insbesondere gemäß einem der vorherigen Ansprüche, der ringförmig ausgebildet ist, zum Aufschieben auf einen Finger, und der eine in Längsrichtung des Grundkörpers angeordnete Aussparung zur Aufnahme einer Fingerspitze aufweist. Solcher Grundkörper ist im Anspruch 5 definiert.

Weiterhin betrifft die Erfindung eine Verwendung einer Halterung mit einem Befestigungssystem zum Verbinden der Halterung mit dem vorherigen Grundkörper. Das Zahnreinigungssystem ist insbesondere mit zwei voneinander beabstandeten Schenkeln und zwischen den beiden Schenkeln gehaltener Zahnseide vorgesehen.

Solches Verfahren ist im Anspruch 9 definiert.

Aus dem Stand der Technik sind hinlänglich Vorrichtungen zum Halten von Zahnseide bekannt. So zeigt die US 5 222 510 A einen Ring mit zwei Schenkeln, zwischen welchen Zahnseide gespannt wird. Derartige Vorrichtungen haben sich jedoch bei der Handhabung als unpraktisch herausgestellt.

Aus der US 5 893 379 A ist ein Zahnreinigungssystem bekannt, das mit zwei Fingern geführt wird. Dieses System nimmt im Mundraum viel Platz ein und ist deshalb schlecht handhabbar. Die beiden Finger bewirken darüber hinaus, dass die Zahnseide beim Einführen in den Zahnzwischenraum nur sehr schlecht gespannt gehalten werden kann.

Die US 5 881 745 A offenbart ein Zahnreinigungssystem mit einer Halterung für Zahnseide, die zwei voneinander beabstandete Schenkel und eine zwischen den beiden Schenkeln gehaltene Zahnseide aufweist. Ein Grundkörper dient zum Aufschieben auf einen Finger, welcher eine in Längsrichtung des Grundkörpers angeordnete Aussparung zur Aufnahme einer Fingerspitze aufweist. Der Grundkörper ist in Form eines Fingerhutes ausgebildet. Zur Steuerung des Zahnreinigungssystems im Mund ist ein zweiter Fingerhut oder zumindest ein Teil eines zweiten Fingerhutes vorgesehen. Die Steuerung kann damit allerdings nur mit einem Finger erfolgen, ist damit ungenau und nimmt dennoch viel Platz im Mundraum ein.

Die US 2011/186074 A1 offenbart eine Mundpflegevorrichtung mit einem Griff, einem Hals und einem Paar gekrümmter Arme. Der Griff umfasst ein vergrößertes distales Ende und ein verkleinertes proximales Ende sowie ein Paar sich nach unten erstreckende Griffwände. Die Griffwände sind an ihren oberen Enden beabstandet und laufen an ihren unteren Enden zusammen, um einen im Wesentlichen V-förmigen Querschnitt und einen sich nach oben öffnenden blinden Hohlraum zu bilden. Ein Hals erstreckt sich in distaler Richtung vom Griff und bildet einen Zungenabschnitt, der gegenüber einer oberen Fläche zurückgesetzt ist. Das Paar gekrümmter Arme erstreckt sich distal und nach unten vom Hals. Eine allseitige Führung der Vorrichtung im Mund ist nur schwer möglich.

Aus der US 2005/133058 A1 ist ein U-förmiger Halter bekannt, bei dem eine Zahnseide zwischen zwei Spitzen des U-förmigen Halters befestigt und überbrückt ist. Es sind mehrere Scharniere vorhanden, um den Halter aus einer zweidimensionalen in eine dreidimensionale Form zu bringen. Der Halter ist groß und im Mundraum schlecht zu führen.

Dokument US6065480 offenbart ein Zahnseidewerkzeug mit einem ringförmigen Träger für einen Finger wobei eine Stabilisierungsflügel von der Träger überragt.

Aufgabe der vorliegenden Erfindung ist es somit, ein System zur Reinigung von Zähnen, insbesondere Zahnzwischenräumen, bereitzustellen, dessen Anwendung vereinfacht ist.

Die Aufgabe wird durch die Merkmale der unabhängigen Patentansprüche gelöst. Weitere vorteilhafte Ausgestaltungen ergeben sich aus den Unteransprüchen und den Zeichnungen.

Vorgeschlagen wird ein Zahnreinigungssystem mit einer Halterung für Zahnseide. Die Halterung des Zahnreinigungssystems weist zwei voneinander beabstandete Schenkel und eine zwischen den beiden Schenkeln gehaltene Zahnseide auf. Die Zahnseide ist ausgebildet, um in den Zahnzwischenraum eingebracht zu werden, so dass dieser gereinigt werden kann. Ferner umfasst das Zahnreinigungssystem einen Grundkörper, wobei die Schenkel an dem Grundkörper angeordnet sind.

Die Schenkel der Halterung erstrecken sich im Wesentlichen quer zur Längsrichtung des Grundkörpers, so dass die Schenkel und der Grundkörper vorzugsweise winkelig zueinander angeordnet sind. An beiden Seiten des Grundkörpers ist gemäß der Erfindung jeweils eine Grifffläche angeordnet, die zur Bewegungssteuerung der Zahnseide im Mund mit den zum Grundkörper benachbarten Fingern vorgesehen ist. Die Griffflächen erstrecken sich vorzugsweise in Längsrichtung des Grundkörpers.

Der Grundköper weist in Längsrichtung eine Aussparung zur Aufnahme einer Fingerspitze auf und ist ringförmig ausgebildet. Die Längsrichtung des Grundkörpers erstreckt sich von einer ersten Aussparungsöffnung bis zu einer zweiten Aussparungsöffnung, durch welche der Finger in die Aussparung geführt werden kann.

Auf diese Weise kann der Finger im Wesentlichen parallel zum Kauflächenrelief in den Mundraum eingeführt und nach unten gedrückt werden, um die Zahnseide in den Zahnzwischenraum einzubringen. Die Griffflächen erlauben, dass das Zahnreinigungssystem im Mundraum bewegt und gesteuert werden kann, so dass die Zahnseide den Zahnzwischenraum gezielt von Verunreinigungen befreit. Vorzugsweise erstrecken sich die Schenkel schräg zur Längsrichtung des Grundkörpers.

An der den Schenkeln gegenüberliegenden Seite des Grundkörpers ist vorteilhafterweise eine weitere zweite Grifffläche zur Bewegungssteuerung der Zahnseide im Mund mit dem Daumen vorgesehen. Neben der seitlichen Führung durch die beiden ersten Griffflächen kann durch diese weitere Grifffläche mit dem Zeigefinger Druck auf das Zahnreinigungssystem ausgeübt werden. Eng benachbarte Zähne erschweren üblicherweise das Einführen der Zahnseide in den Zahnzwischenraum. Die kontrollierte Führung des Zahnreinigungssystems durch die Griffflächen erleichtert das Einbringen der Zahnseide, da der Druck und die Bewegung gezielt erfolgen können.

Die erste Griffflächen bilden eine flügelartige und den Grundkörper überragende Fläche. Damit ist eine möglichst große Angriffsfläche für die Finger bereitgestellt, ohne das Zahnreinigungssystem insgesamt zu groß zu dimensionieren, um es angenehm im Mundraum positionieren zu können.

Von Vorteil ist es, wenn zumindest eine der Griffflächen eine griffige, insbesondere gewölbte, gelochte und/oder geriffelte, Oberfläche aufweist. Die Haptik der Griffflächen verbessert die Handhabung des Zahnreinigungssystems, da auch bei möglicherweise feuchter Oberfläche ein guter Halt gewährleitstet ist.

Vorteilhaft ist es, wenn die Halterung und der Grundkörper ein- oder mehrteilig ausgebildet sind. Die Zahnseide sollte aus hygienischen Gründen regelmäßig gewechselt werden. Bei einer mehrteiligen Ausbildung des Zahnreinigungssystems, insbesondere durch eine zum Grundkörper separate Halterung der Zahnseide, ist es möglich, die Halterung samt Zahnseide auszutauschen. Alternativ können die Halterung und der Grundkörper einteilig ausgebildet sein, wobei die Zahnseide vorzugsweise lösbar mit der Halterung verbunden ist, so dass diese unabhängig von der Halterung ausgetauscht werden kann. Das Zahnreinigungssystem ist somit modular ausgebildet, um den Wechsel der Zahnseide möglichst einfach zu realisieren. Selbstverständlich kann die Zahnseide in diesem Fall auch fest mit dem Zahnreinigungssystem verbunden sein, das dann nach jeder Zahnreinigung komplett entsorgt wird.

Es stellt einen Vorteil dar, wenn der Grundkörper einen Schlitz aufweist. Der Schlitz ist vorzugsweise zur Aufnahme zumindest eines Teils der Halterung ausgebildet. Ferner ist es denkbar den Schlitz derart zu spannen, dass die Aussparung vergrößert oder verkleinert wird, um das Zahnreinigungssystem an verschiedene Fingergrößen anpassen zu können.

Ein Befestigungssystem verbindet die Halterung und den Grundkörper vorteilhafterweise miteinander. Durch das Befestigungssystem können die Halterung und der Grundkörper lösbar miteinander verbunden werden.

Von Vorteil ist es, wenn die Halterung und der Grundkörper jeweils einen Teil des Befestigungssystems umfassen. Die beiden Teile sind derart komplementär zueinander ausgebildet, dass die von der Halterung gehaltene Zahnseide vorgespannt ist, wenn die Halterung und der Grundkörper miteinander verbunden sind.

Weiterhin ist es von Vorteil, wenn das Befestigungssystem eine formschlüssige und/oder kraftschlüssige Verbindung aufweist. Vorzugsweise weist das Befestigungssystem eine Befestigungsschiene und einen Befestigungsschlitten auf, wobei die Befestigungsschiene an der Halterung und der Befestigungsschlitten an dem Grundkörper ausgebildet ist. Ebenso kann der Befestigungsschlitten an der Halterung und die Befestigungsschiene an dem Grundkörper angeordnet sein. Ferner kann das Befestigungssystem eine Magnet-, Schraub-, Steck-, Dreh-, Klebe-, Klett- und/oder eine Schnappverbindung umfassen, so dass die Halterung und der Grundkörper lösbar miteinander verbunden werden können.

Einen Vorteil stellt es dar, wenn eine lösbare Verriegelung die Verbindung zwischen Halterung und Grundkörper sichert. Die Verriegelung kann einerseits an der Halterung und andererseits an dem Grundkörper angeordnet sein. Bei gesicherter Verriegelung ist insbesondere bei der Anwendung im Mundraum sichergestellt, dass die Halterung nicht von dem Grundkörper getrennt werden kann. Auf diese Weise ist gewährleistet, dass weder die Halterung noch der Grundkörper verschluckt werden können.

Die Befestigungsschiene und der Befestigungsschlitten laufen vorteilhafterweise in Längs- und/oder Querrichtung des Grundkörpers konisch zu. Durch die konische Ausbildung der Befestigungsschiene und des Befestigungsschlittens können diese geführt miteinander verbunden werden. Ferner ist es möglich die Spannung der Zahnseide durch den gewählten Einschiebedruck festzulegen. Je weiter der Befestigungsschlitten in die Befestigungsschiene eingeführt ist und je kleiner damit im Wesentlichen der verbleibende Kegelabschnitt ist, umso mehr wird die Zahnseide zwischen den Schenkeln gespannt. Die winkelige Führung erlaubt eine erhöhte Vorspannung.

Ferner ist es von Vorteil, wenn die Befestigungsschiene und/oder der Befestigungsschlitten seitliche, insbesondere U- und/oder schwalbenschwanzförmig ausgebildete, Führungsflächen aufweisen.

Es ist vorteilhaft, wenn die Führungsflächen der Befestigungsschiene und des Befestigungsschlittens im nicht montierten Zustand nicht parallel zueinander sind, so dass die mit dem Grundkörper verbundene Halterung im montierten Zustand derart gespreizt ist, dass die Zahnseide zwischen den Schenkeln gespannt ist.

Einen Vorteil stellt es dar, wenn ein Sicherungselement, insbesondere ein Faden, die Halterung und/oder den Grundkörper vor Verschlucken sichert.

An der Halterung und/oder an dem Grundkörper, in einem Bereich zwischen den beiden Schenkeln, der Zahnseide und dem Grundkörper ist vorteilhafterweise ein Anschlag angeordnet, so dass die Tiefe des Einbringens der Zahnseide in einen Zahnzwischenraum in einer Vertikalrichtung begrenzt ist. Der Anschlag ist derart gewählt, dass die Zahnseide vorzugsweise nicht oder nur leicht mit dem Zahnfleisch in Berührung kommen kann, so dass Zahnfleischbluten und Verletzungen vorgebeugt wird. In Abhängigkeit davon für welche Personengruppe das Zahnreinigungssystem vorgesehen ist, kann die Anschlagshöhe variieren.

Durch den Anschlag ist der Abstand der Zahnseide von dem Anschlag definiert und es wird damit die Tiefe des Einbringens der Zahnseide in einen Zahnzwischenraum in einer Vertikalrichtung begrenzt. Die Länge der Schenkel und/oder die Anordnung oder Höhe des Anschlags ist/sind derart gewählt, dass der Abstand je nach Tiefe des zu reinigenden Zahnzwischenraumes unterschiedlich ist, so dass möglichst keine Verletzung des Zahnfleisches erfolgt.

Nachdem die Zahnlängen der zu behandelnden Personen sehr unterschiedlich sein können, wird bei herkömmlichen Systemen sehr häufig eine Verletzung des Zahnfleisches verursacht, wenn die Zahnseide bis auf das Zahnfleisch durchschlägt. Durch eine Festlegung des Abstandes zwischen der Zahnseide und dem Anschlag wird die Tiefe festgelegt, wie weit die Zahnseide von der Oberseite des Zahnes in den Zahnzwischenraum eindringen kann. Sobald der Anschlag auf der Oberseite des Zahns anschlägt, wird auch die Zahnseide gestoppt. Idealerweise ist dies der Fall unmittelbar bevor die Zahnseide das Zahnfleisch erreicht. Der Abstand zwischen Zahnseide und Anschlag kann entweder durch die Baumaße vordefiniert oder auch durch die Konstruktion einstellbar sein. So können beispielsweise Zahnreinigungssysteme zur Verfügung gestellt werden, welche einen ganz bestimmten Abstand vorgeben. Dieser Abstand kann variieren, je nach Wahl des Anwenders für ein Zahnreinigungssystem mit einem bestimmten Abstand. Je nach Ausführung ist es auch möglich, dass dieser Abstand verstellbar ist, sodass jeder Anwender diesen Abstand je nach Bedarf einstellen kann.

In einer vorteilhaften Ausführung ist der Anschlag in einem Bereich zwischen den beiden Schenkeln angeordnet. Dieser Bereich kann unmittelbar unter der Zahnseide, aber auch seitlich versetzt hierzu sein. Wesentlich ist, dass der Anschlag auf der Zahnoberfläche zum Wirken kommt und dabei das Eindringen der Zahnseide in den Zahnzwischenraum stoppt.

Von Vorteil ist es, wenn der Anschlag durch die der Zahnseide gegenüberliegende Fläche des Grundkörpers oder der Halterung gebildet ist und die Tiefe des Einbringens durch die Länge der Schenkel und/oder die Höhe des Anschlags bestimmt ist. Die Länge der Schenkel ist vorzugsweise durch den Bereich festgelegt, welcher sich von dem Befestigungsbereich der Zahnseide bis zum Anschlag erstreckt. Wenn der Anschlag durch die der Zahnseide gegenüberliegende Fläche des Grundkörpers gebildet ist, sind die Halterung und der Grundkörper vorzugsweise einteilig ausgebildet. Alternativ kann eine zwischen den Schenkeln befindliche Innenseite der Halterung den Anschlag festlegen. Die Höhe des Anschlags kann entweder durch die entsprechende, unterschiedliche Anordnung des Anschlags an der Halterung oder dem Grundkörper festgelegt werden. Es ist aber auch möglich, dass die Bauhöhe jeweils verschiedener Anschläge unterschiedlich ausgeführt ist, sodass auch hierdurch der Abstand zwischen dem Anschlag, also der Fläche, welche auf die Oberseite des Zahnes anschlägt, und der Zahnseide variiert werden kann. Es kann hierdurch beispielsweise ein Set zur Verfügung gestellt werden, welches passgenau für die unterschiedlichen Benutzer verschiedene Abstände vorgibt.

Eine Einstellung der Länge der Schenkel und/oder die Höhe des Anschlags kann insbesondere durch eine translatorische oder rotatorische Beweglichkeit der Schenkel und/oder des Anschlags erfolgen. Hierdurch wird beispielsweise durch ein teleskopartiges Verschieben der Schenkel oder des Anschlages der Abstand zwischen Zahnseide und Anschlag verändert und damit auf die individuellen Bedürfnisse des Anwenders eingestellt. Alternativ oder zusätzlich ist es auch möglich, die Schenkel oder den Anschlag zu drehen und hierdurch beispielsweise mittels einer schrägen Fläche oder eines Gewindeganges den Abstand zwischen Zahnseide und Anschlag zu verändern. Dies hat den Vorteil, dass nicht unterschiedliche Bauteile für verschiedene Schenkellängen oder Höhen des Anschlags zur Verfügung gestellt werden müssen, da die einzelnen Bauteile an sich einstellbar ausgeführt sind.

Vorzugsweise ist der Anschlag Teil des Befestigungssystems. Insbesondere kann ein Zentrierstift des Befestigungssystems den Anschlag bilden. Hierdurch wird für den Zentrierstift eine Doppelfunktion ausgebildet. Einerseits dient er dem Befestigungssystem für eine schnelle und zuverlässige Verbindung zwischen Grundkörper und Halterung. Andererseits bildet er selbst den Anschlag und es können durch eine unterschiedliche Ausführung der Länge des Zentrierstifts unterschiedliche Abstände zwischen dem Anschlag bzw. Zentrierstift und der Zahnseide definiert werden.

Ist in einer vorteilhaften Ausführung der Anschlag an einem Teil des Befestigungssystems, insbesondere einem Zentrierstift, angeordnet, so dient das Befestigungssystem nicht nur zur Verbindung von Grundkörper und Halterung, sondern ist außerdem für die Befestigung des Anschlags vorgesehen. Der Anschlag kann hierbei beispielsweise eine Öffnung aufweisen, welche mit dem Zentrierstift korrespondiert und wodurch der Anschlag auf den Zentrierstift aufgesteckt werden kann.

Vorzugsweise ist eine Arretierung vorgesehen, um die verstellbare Länge der Schenkel und/oder die verstellbare Höhe des Anschlags zu arretieren. Hierdurch wird sichergestellt, dass die eingestellte Position der Schenkel bzw. des Anschlags während der Anwendung der Zahnseide nicht selbstständig verstellt. Insbesondere bei einer translatorischen oder rotatorischen Verschiebung der Schenkel bzw. des Anschlags ist eine derartige Arretierung von Vorteil.

Die Halterung und/oder der Grundkörper weisen vorteilhafterweise ein Befestigungselement zur Befestigung von Zahnseide auf. Das

Befestigungselement kann beispielsweise kegelförmig ausgebildet und mit einem Klemmschlitz ausgestattet sein, so dass die Enden der Zahnseide mehrere Male um das Befestigungselement gewickelt und im Klemmschlitz fixiert werden können. Es ist ebenso denkbar, dass der Klemmschlitz in den Schenkeln selbst ausgebildet ist, so dass die Zahnseide unmittelbar in die Schenkel geklemmt wird.

Zur Kennzeichnung einer bestimmten Größe der Halterung und/oder des Grundkörpers und/oder einer bestimmten Zahnseide, ist es vorteilhaft, wenn die Halterung und/oder der Grundkörper und/oder der Anschlag eine Codierung, insbesondere eine Farbkodierung, aufweisen. Für Kinder vorgesehene Zahnreinigungssysteme können beispielsweise Motive aufweisen, wodurch das Zahnreinigungssystem möglicherweise attraktiver für Kinder wird. Ebenso ist es denkbar, je nachdem für welche Fingergröße das Zahnreinigungssystem ausgestattet ist, unterschiedliche Farben des Grundkörpers und/oder der Halterung zu wählen.

Vorzugsweise ist die Halterung (12) und/oder der Grundkörper (1) und/oder der Anschlag (26) aus einem nachwachsenden und insbesondere verzehrbaren Rohstoff oder bio-kompostierbaren Material hergestellt. Damit wird einerseits ein übermäßiger Verbrauch von Kunststoff reduziert und darüber hinaus bei einem versehentlichen Verschlucken die Gefahr einer Verletzung des Benutzers vermieden. Außerdem ist es möglich, dass gezielt beispielsweise für die Anwendung bei Kindern ein Anreiz zur Anwendung des Zahnreinigungssystems dadurch geschaffen wird, dass der Benutzer nach der Reinigung des Zahnzwischenraums das Zahnreinigungssystem oder zumindest Teile davon verspeisen kann.

In einer besonders bevorzugten Ausführung des Zahnreinigungssystems ist der Abstand der Zahnseide von dem Anschlag kleiner als 12 mm, ganz vorzugsweise kleiner als 8 mm. In diesem Maßbereich kann optimal auf die individuellen Tiefen der Zahnzwischenräume eingegangen werden. Dies ist insbesondere dann der Fall, wenn die Zahnseide zwischen den Schenkeln bereits gespannt ist, bevor sie in den Zahnzwischenraum eingeführt wird. Spätestens bei dem Überwinden des Kontaktpunktes zweier benachbarter Zähne wird die Zahnseide zwar gespannt, nach diesem Überwinden des Kontaktpunktes nimmt sie aber wieder weitgehend die Spannung ihres Ursprungszustands an. Wenn sie also zuvor schlaff zwischen den Schenkeln angeordnet war, muss der Abstand der Zahnseide von dem Anschlag relativ groß sein, um den Kontaktpunkt zu überwinden, bevor der Anschlag erreicht wird. Danach ist dieser Abstand aber wieder zu groß, um das Zahnfleisch nicht zu beschädigen. Wenn die Zahnseide im Ausgangszustand bereits gespannt ist, kann dieser Abstand sehr genau vorausbestimmt sein. Lediglich die Eigendehnung der Zahnseide und gegebenenfalls eine Biegung der Schenkel ist in diesem Fall noch zu berücksichtigen, um den richtigen Abstand der Zahnseide von dem Anschlag für eine bestimmte Tiefe des Zahnzwischenraumes festlegen zu können. Idealerweise wird der Kontaktpunkt überwunden, ohne dass der Anschlag erreicht wird und dass danach der Abstand zwischen Zahnseide und Anschlag so ist, dass das Zahnfleisch nicht verletzt wird.

Typischerweise ist die Tiefe eines Zahnzwischenraumes eines erwachsenen Menschen unter 10 mm und eines Kindes sogar nur unter 5 mm. Eine entsprechende Höhe des Anschlages bzw. Länge der Schenkel schafft somit eine besonders schonende Reinigung des Zahnzwischenraumes ohne Verletzung des Zahnfleisches.

Vorteilhafterweise ist das Verhältnis des Abstandes der Zahnseide von dem Anschlag zu einer wirksamen Länge der Zahnseide kleiner oder gleich 0,5. Dies bedeutet, dass beispielsweise bei einer wirksamen Länge der Zahnseide von 20 mm der Abstand der Zahnseide von dem Anschlag höchstens 10 mm ist. Mit diesem Verhältnis kann eine gute Spannung in die Zahnseide in Relation zu deren Durchbiegung und Entspannung nach dem Überwinden des Kontaktpunktes eingebracht werden und die Zahnseide schlägt nach dem Überwinden des Kontaktpunktes nicht bis zum Zahnfleisch durch.

Vorgeschlagen wird ferner ein Grundkörper für ein Zahnreinigungssystem. Das Zahnreinigungssystem ist vorzugsweise gemäß der vorhergehenden oder nachfolgenden Beschreibung ausgebildet.

Der Grundkörper ist zum Aufschieben auf einen Finger insbesondere U- oder ringförmig ausgebildet und weist eine in Längsrichtung des Grundkörpers angeordnete Aussparung zur Aufnahme einer Fingerspitze auf. Die Aussparung erstreckt sich vorzugsweise von einer ersten zu einer zweiten Aussparungsöffnung. Ebenso ist es denkbar, dass die Aussparung lediglich eine Aussparungsöffnung aufweist, so dass der Grundkörper im Wesentlichen fingerhutförmig ausgebildet ist. Die Längsrichtung erstreckt sich im Grunde genommen durch den Mittelpunkt der Aussparung bzw. parallel zu dessen Symmetrieachse.

Zumindest an beiden Seiten des Grundkörpers ist jeweils eine Grifffläche angeordnet, die zur Bewegungssteuerung von Zahnseide im Mund mit den zum Grundkörper benachbarten Fingern vorgesehen ist. Die Grifffläche erstreckt sich vorzugsweise in Längsrichtung. Dadurch ist es möglich den Grundkörper und somit das gesamte Zahnreinigungssystem im Wesentlichen dreidimensional zu steuern. Die Bewegungssteuerung erfolgt taktil. Vorzugsweise werden die beiden Griffflächen von dem Daumen und Mittelfinger bedient, so dass der Zeigefinger stabilisiert und die Druck-, Schub- und Torsionsbewegungen erhöht werden. Wenn der Grundkörper bzw. das Zahnreinigungssystem in den Mundraum eingeführt sind, sind die Griffflächen vorzugsweise an dem Grundkörper in Mundrichtung ausgerichtet. Die Griffflächen überragen somit den Grundkörper vorzugsweise in der Längsrichtung.

Dabei stellt es einen Vorteil dar, wenn zwischen den beiden seitlichen ersten Griffflächen eine zweite Grifffläche zur Bewegungssteuerung der Zahnseide im Mund mit dem Daumen vorgesehen ist. An der zweiten Grifffläche greift vorzugsweise der Zeigefinger an, um Druck auf den Grundkörper auszuüben, so dass die Zahnseide des Zahnreinigungssystems in den Zahnzwischenraum eingebracht und geführt werden kann.

Die beiden seitlichen Griffflächen bilden eine flügelartige und den Grundkörper überragende Fläche. Dadurch können die Finger den Grundkörper ergonomisch greifen.

An dem Grundkörper ist vorteilhafterweise ein erster Teil eines form-und/oder kraftschlüssigen Befestigungssystems zur Aufnahme einer Halterung für Zahnseide zur Verbindung des Grundkörpers mit einer Halterung für Zahnseide ausgebildet. Der Teil des Befestigungssystems ist vorzugsweise eine Befestigungsschiene oder ein Befestigungsschlitten, ein Teil einer Magnet-, Schraub-, Steck-, Dreh-, Klebe-, Klettverbindung und/oder einen Teil einer Schnappverbindung.

Vorzugsweise ist ein Anschlag am ersten Teil des Befestigungssystems angeordnet. Hierdurch kann das Befestigungssystem für die Halterung gleichzeitig zur Befestigung des Anschlages dienen. Eine einfache Konstruktion und Herstellung ist hierdurch möglich.

An dem Grundkörper ist, in einem Bereich, an dem zwei Schenkel zum Halten der Zahnseide angeordnet werden können, ein Anschlag angeordnet, so dass die Tiefe des Einbringens der Zahnseide in einen Zahnzwischenraum in einer Vertikalrichtung begrenzt ist. Bei einem einteiligen System kann dabei eine stabile Befestigung des Anschlags an dem Grundkörper erfolgen. Bei einem 2-teiligen System ist es ganz besonders vorteilhaft, wenn an dem Grundkörper der Anschlag angeordnet ist. So kann beispielsweise durch eine Kombination mit einer Halterung für die Zahnseide, welche unterschiedliche Schenkellängen hat, eine unterschiedliche Tiefe des Arbeitsbereichs der Zahnseide erzielt werden. Andererseits ist es auch möglich, bei gleichen Halterungen für die Zahnseide unterschiedliche Grundkörper zur Verfügung zu stellen, welche jeweils einen anderen Anschlag bzw. eine andere Anschlagshöhe aufweisen.

Es ist von Vorteil, wenn die Aussparung konisch und/oder abgeflacht ausgebildet ist, so dass das Reinigungssystem drehfest auf dem Finger gehalten werden kann. Vorzugsweise ist dabei die erste Aussparungsöffnung größer als die zweite Aussparungsöffnung, so dass eine Innenfläche der Aussparung konisch zuläuft. Um den Grundkörper drehfest auf dem Finger halten zu können, kann die Innenfläche der Aussparung aus mehreren winkelig zueinander angeordneten Flächensegmenten ausgebildet sein.

Von Vorteil ist es, wenn der Grundkörper einen Schlitz aufweist, insbesondere zur Aufnahme der Halterung und/oder zur Anpassung an verschiedene Fingergrößen. Der Schlitz erstreckt sich vorzugsweise in Längsrichtung des Grundkörpers. Es ist denkbar, dass der Grundkörper mehrere Schlitze aufweist und dadurch flexibel ausgebildet ist, um an unterschiedliche Fingergrö-ßen angepasst werden zu können.

Der Grundkörper ist vorteilhafterweise U-förmig oder er ist als an seinem Umfang geschlossener oder geöffneter Ring und/oder Fingerhut ausgebildet.

Vorgeschlagen wird ferner eine Halterung für Zahnseide für ein Zahnreinigungssystem. Das Zahnreinigungssystem ist vorzugsweise gemäß der vorhergehenden oder nachfolgenden Beschreibung ausgebildet. Die Halterung weist zwei voneinander beabstandete Schenkel und eine zwischen den beiden Schenkeln gehaltene Zahnseide auf.

Ist vorteilhafterweise an einer zwischen den beiden Schenkeln und der Zahnseide gebildeten Innenseite der Halterung ein Anschlag angeordnet, so ist es möglich, dass die Halterung nur einen kleinen Bauraum einnimmt und somit im Mund des Anwenders leicht zu bewegen ist.

An zumindest einem der beiden Schenkel kann ein Anschlag angeordnet sein, so dass das Einbringen der Zahnseide in einen Zahnzwischenraum in einer Vertikalrichtung begrenzt ist. Durch den Anschlag kann zuverlässig eine Verletzung des Zahnfleisches vermieden werden, da die Eindringtiefe der Zahnseide in den Zahnzwischenraum vorzugsweise unmittelbar vor Erreichen des Zahnfleisches endet.

Die Halterung weist einen zweiten Teil eines form- und/oder kraftschlüssigen Befestigungssystems zur Verbindung der Halterung mit einem Grundkörper des Zahnreinigungssystems auf. Der zweite Teil ist vorzugsweise ein Befestigungsschlitten oder eine Befestigungsschiene und/oder ein Teil einer Magnet-, Schraub-, Steck-, Klebe-, Klett-, Dreh- oder Schnappverbindung.

Durch die Halterung ist es erlaubt, die Zahnseide vom Zahnreinigungssystem zu entfernen, ohne das gesamte Zahnreinigungssystem austauschen zu müssen.

Vorteilhafterweise ist das Befestigungssystem längs oder quer zur Ausrichtung der Zahnseide angeordnet.

Die Zahnseide zwischen den beiden Schenkeln, wenn die Halterung an dem Grundkörper befestigt ist, gespannt.

Von Vorteil ist es, wenn in einem zwischen den beiden Schenkeln, der Zahnseide und einer Unterseite des Befestigungsschlittens ausgebildeten Bereich ein Anschlag angeordnet ist, so dass das Einbringen der Zahnseide in einen Zahnzwischenraum in einer Vertikalrichtung begrenzt ist.

Die Erfindung enthält auch eine Verwendung einer Halterung mit einem Befestigungssystem zum Verbinden der Halterung mit dem Grundkörper der Erfindung, wobei die Halterung ein Zahnreinigungselement aufweist, insbesondere ein zuvor beschriebenes Zahnreinigungssystem mit Zahnseide. Die Halterung ist aber auch geeignet als Halterung für ein Zahnreinigungselement zum Reinigen der Zahnoberflächen oder der Zahnzwischenräume, wie insbesondere Zahnseide, Zahnstocher, Interdentalbürste oder Zahnbürste. Damit kann die Halterung universell eingesetzt werden. Je nach Anwendungszweck ist sie mit anderen Reinigungselementen bestückt.

Vorzugsweise ist die Halterung einteilig mit einem Grundkörper ausgebildet. Alternativ weist die Halterung einen zweiten Teil eines form- und/oder kraftschlüssigen Befestigungssystems, insbesondere einen Befestigungsschlitten oder eine Befestigungsschiene zur Aufnahme in einem Grundkörper des Zahnreinigungssystems und/oder einen Teil einer Magnet-, Schraub-, Steck-, Klebe-, Klett- oder Drehverbindung und/oder einen Teil einer Schnappverbindung, zur Verbindung der Halterung mit einem Grundkörper des Zahnreinigungssystems auf. Der Grundkörper kann in diesem zweiteiligen Fall mit unterschiedlichen Halterungen mit unterschiedlichen Reinigungselementen verbunden werden.

Die Vorteile der Erfindung sind in einigen der nachfolgenden Ausführungsbeispielen beschrieben. Es zeigt:
- **Figur 1**: eine Draufsicht eines Grundkörpers gemäß einem ersten Ausführungsbeispiel,
- **Figur 2**: eine Draufsicht einer Halterung gemäß eines Ausführungsbeispiels,
- **Figur 3**: eine Draufsicht auf ein Zahnreinigungssystem mit einem Grundkörper und einer Halterung gemäß alternativer Ausführungsbeispiels,
- **Figur 4**: eine perspektivische Darstellung des Zahnreinigungssystems gemäß einem weiteren Ausführungsbeispiel, welches Teil der Erfindung ist,
- **Figur 5a**: eine Vorderansicht der Halterung,
- **Figur 5b**: eine Vorderansicht des Grundkörpers, gemäß ein Ausführungsbeispiel der Erfindung,
- **Figur 6**: eine Seitenansicht des Zahnreinigungssystems gemäß einer weiteren Ausführungsform, welches Teil der Erfindung ist,
- **Figur 7**: eine Draufsicht auf das Zahnreinigungssystem gemäß eines zusätzlichen Ausführungsbeispiels,
- **Figur 8**: eine Draufsicht des Grundkörpers gemäß einem weiteren Ausführungsbeispiel,
- **Figur 9**: eine Seitenansicht des Zahnreinigungssystems gemäß einer alternativen Ausführungsform, welches Teil der Erfindung ist,
- **Figur 10**: eine Draufsicht des Grundkörpers gemäß einem ersten Ausführungsbeispiel ähnlich der Figur 1,
- **Figur 11**: eine Draufsicht auf ein Zahnreinigungssystem gemäß einem weiteren Ausführungsbeispiel, welches Teil der Erfindung ist,
- **Figur 12**: einen Schnitt durch eine Seitenansicht des Zahnreinigungssystems ähnlich der Figur 11,
- **Figur 13**: einen Schnitt durch eine Seitenansicht des Zahnreinigungssystems ähnlich der Figur 11,
- **Figur 14**: eine Draufsicht auf ein Zahnreinigungssystem mit einem Griff gemäß einem weiteren Ausführungsbeispiel, welches nicht Teil der Erfindung ist,
- **Figur 15**: eine Seitenansicht des Zahnreinigungssystems gemäß einer alternativen zweiteiligen Ausführungsform,
- **Figur 16**: eine Seitenansicht des Zahnreinigungssystems gemäß einer alternativen einteiligen Ausführungsform und
- **Figuren 17 bis 20**: Seitenansichten verschiedener Zahnreinigungselemente an jeweils einer Halterung.

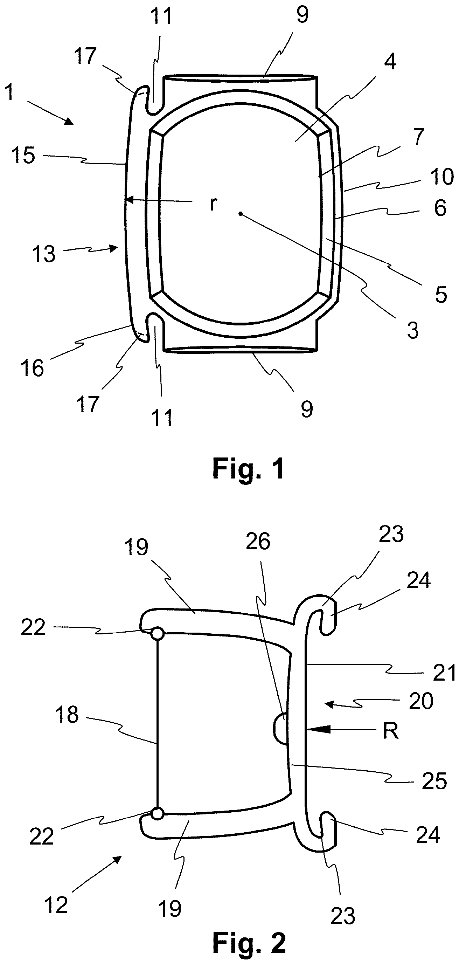

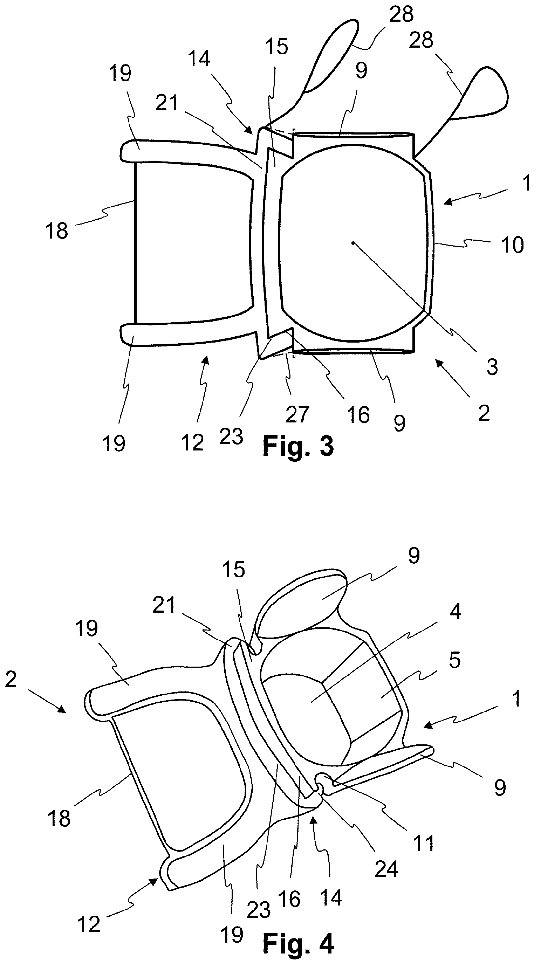

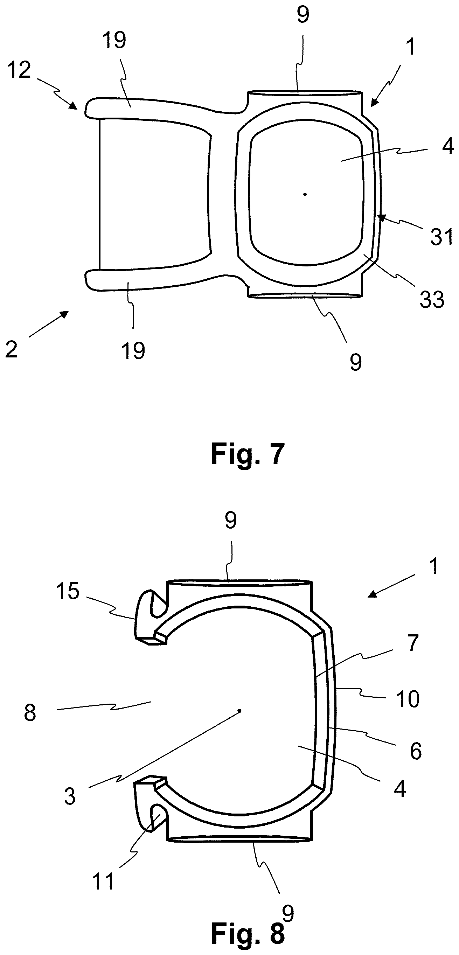

Figur 1 zeigt einen Grundkörper 1 für ein Zahnreinigungssystem 2 gemäß der nachfolgenden Figuren 3, 4, 6, 7 und 9. Der Grundkörper 1 weist eine sich in eine Längsrichtung 3 erstreckende Aussparung 4 zur Aufnahme einer nicht dargestellten Fingerspitze auf. In Figur 1 verläuft die Längsrichtung 3 in die Blattebene hinein. Der Grundkörper 1 ist ringförmig ausgebildet. Ebenso kann der Grundkörper 1 U-förmig ausgebildet sein (vgl. Fig. 8).

Die Aussparung 4 weist eine konisch geformte Innenfläche 5 auf, weshalb eine erste Aussparungsöffnung 6 größer ist als eine entlang der Längsrichtung 3 versetzte zweite Aussparungsöffnung 7. Damit ist die Aussparung 4 im Wesentlichen komplementär zum Finger ausgebildet. Denkbar wäre es, dass die Aussparung 4 lediglich die erste Aussparungsöffnung 6 aufweist und fingerhutförmig ausgebildet ist. Ebenso können die beiden Aussparungsöffnungen 6, 7 gleich groß sein, so dass die Aussparung zylindrisch geformt ist.

Für unterschiedliche Fingerformen werden unterschiedlich große Aussparungen 4 bereitgestellt. Die Innenfläche 5 ist ferner polygonal ausgebildet, so dass der Grundkörper 1 und damit das Zahnreinigungssystem 2 gemäß der Figuren 3 und 4 drehfest auf dem Finger, insbesondere dem Zeigefinger, gehalten ist.

Der Grundkörper 1 weist mehrere, vorzugsweise vier, Seiten auf. An zwei sich gegenüberliegenden Seiten ist jeweils eine erste Grifffläche 9 angeordnet. Die beiden ersten Griffflächen 9 sind zur Bewegungssteuerung des Grundkörpers bzw. des Zahnreinigungssystems (vgl. Fig. 3, 4, 6, 7 und 9) im Mundraum vorgesehen. Vorzugsweise greifen der Daumen und der Mittelfinger an den beiden ersten Griffflächen 9 an, um den Grundkörper 1 zu halten. Erfindungsgemäß bilden die beiden ersten Griffflächen 9 eine flügelartige Fläche, welche den Grundkörper 1 überragt. Die erste Grifffläche 9 erstreckt sich entlang der Längsrichtung 3 des Grundkörpers 1.

Zwischen den beiden ersten Griffflächen 9 ist eine zweite Grifffläche 10 vorgesehen. Die zweite Grifffläche 10 dient als weitere Steuerfläche für den Daumen. Zur verbesserten Haptik bei der Bedienung kann eine oder mehrere Griffflächen eine griffige Oberfläche aufweisen. Die Griffflächen 9, 10 kann gewölbt, gelocht und/oder geriffelt sein.

An seiner der zweiten Grifffläche 10 gegenüberliegenden Seite weist der Grundkörper 1 wenigstens einen Schlitz 11 auf. Der Schlitz 11 ist ausgebildet, um den Grundkörper 1 mit einer Halterung 12 des Zahnreinigungssystems 2 zu verbinden. Der Schlitz 11 und die Halterung 12 sind derart komplementär ausgebildet, dass die Halterung 12 zumindest teilweise von dem Schlitz aufgenommen werden kann.

Der Grundkörper 1 weist einen ersten Teil 13 eines Befestigungssystems 14 (vgl. Fig. 3 und 4) auf, mittels welchem die Halterung 12 an dem Grundkörper 1 positioniert werden kann. Der erste Teil 13 des Befestigungssystems 14 ist gemäß Fig. 1 ein Befestigungsschlitten 15. Der Befestigungsschlitten 15 weist eine erste Führungsfläche 16 auf, welche U-förmig ausgebildet ist. Der Befestigungsschlitten 15 verjüngt sich in Längsrichtung 3, wie dies in Figur 1 mit einer gestrichelten Linie 17 dargestellt ist. Der Befestigungsschlitten 15 ist somit im Wesentlichen konisch, so dass der sich verbreiternde Bereich dafür sorgt, dass der Befestigungsschlitten 15 mit einem dafür vorgesehenen Bereich der Halterung 12 verspannt wird (vgl. Fig. 3 und 4).

Figur 2 zeigt die Halterung 12 für das Zahnreinigungssystem 2 (vgl. Fig. 3, 4, 6, 7 und 9), welche insbesondere zur Verbindung mit dem Grundkörper 1 (vgl. Fig. 1, 8) und zum Spannen einer Zahnseide 18 ausgebildet ist. Die Halterung 12 weist zwei voneinander beabstandete Schenkel 19 auf, zwischen welchen die Zahnseide 18 gehalten ist. Die Zahnseide 18 ist mittels wenigstens eines Befestigungselements 22 mit den Schenkeln 19 verbunden. So kann die Zahnseide 18 beispielsweise um das Befestigungselement 22 gewickelt und/oder in dieses geklemmt werden. Ebenso kann die Zahnseide 18, wie es in den Figuren 3 und 4 dargestellt ist, fest mit den Schenkeln 19 verbunden bzw. in diese eingebettet sein.

Die Halterung 12 weist einen zweiten Teil 20 des Befestigungssystems 14 auf, so dass die Halterung 12 kraft- und/oder formschlüssig mit dem Grundkörper 1 (vgl. Fig. 1, 8) verbunden werden kann. Der zweite Teil 20 des Befestigungssystems 14 ist gemäß dem vorliegenden Ausführungsbeispiel eine Befestigungsschiene 21 zur Aufnahme des Befestigungsschlittens 15 des Grundkörpers 1. Die Befestigungsschiene 21 weist eine zweite Führungsfläche 23 auf. Die zweite Führungsfläche 23 ist U-förmig ausgebildet, so dass der Befestigungsschlitten 15 des Grundkörpers 1 darin aufgenommen werden kann. An der Befestigungsschiene 21 ist eine Feder 24 ausgebildet, welche in den Schlitz 11 des Grundkörpers 1 greift, so dass im Wesentlichen eine Nut-Feder-Verbindung ausgebildet werden kann.

Zwischen den beiden Schenkeln 19 und der Zahnseide 18 ist an einer Innenseite 25 der Halterung 12 ein Anschlag 26 angeordnet, so dass das Einbringen der Zahnseide 18 in den Zahnzwischenraum begrenzt ist. Es können Halterungen 12 mit unterschiedlichen oder keinen Anschlägen 26 vorgesehen sein, um eine schonende Behandlung ohne Verletzung des individuellen Zahnfleisches zu gewährleisten.

Die Oberfläche des Befestigungsschlittens 15 (Figur 1) weist eine Wölbung mit einem kleinen Radius r auf. Die korrespondierende Fläche der Befestigungsschiene 21 (Figur 2) weist hingegen einen größeren Radius R auf. Werden die Halterung 12 und der Grundkörper 1 miteinander verbunden, so entsteht eine Biegung der Halterung 12, wodurch die beiden Schenkel 19 auseinandergebogen werden. Hierdurch entsteht eine Spannung der Zahnseide 18, welche das Einführen der Zahnseide 18 in den Zahnzwischenraum und dessen Reinigung deutlich erleichtert. Eine solche Bewegung der Schenkel 19 kann auch durch eine entsprechende Bemaßung der Schlitze 11 und der Federn 24 bewirkt werden. Um die Verbindung von Befestigungsschlitten 15 und Befestigungsschiene 21 zu erleichtern, kann vorgesehen sein, dass anfangs ein großes Spiel vorgesehen ist, das sich schließlich verringert und so erst bei einem weiteren Einschieben der Feder 24 in den Schlitz 11 zu einer Klemmung führt.

Figur 3 zeigt das Zahnreinigungssystem 2 mit dem Grundkörper 1 und der Halterung 12, jeweils gemäß einer alternativen Ausführungsform. Im Unterschied zu dem in der Figur 1 gezeigten Grundkörper 1 und der in Figur 2 gezeigten Halterung 12 sind die beiden Führungsflächen 16, 23 hierin schwalbenschwanzförmig ausgebildet.

Die Führungsfläche 16, 23 des Grundkörpers 1 und der Halterung 12 sind im nicht montierten Zustand, wie er in den Figuren 1 und 2 dargestellt ist, nicht zueinander parallel. Wenn die Halterung 12 bzw. deren Befestigungsschiene 21 auf den Befestigungsschlitten 15. bzw. den Grundkörper geschoben wird, spreizt sich die Halterung 12 derart, dass die Zahnseide 18 zwischen den Schenkeln 19 gespannt ist. Demnach ist die Zahnseide 18, wenn die Halterung 12 und der Grundkörper 1 nicht zum Zahnreinigungssystem 2 miteinander verbunden sind, im Wesentlichen locker zwischen den Schenkeln 19 angebracht. Erst durch die beiden Teile 13, 20 des Befestigungssystems, insbesondere das Verbinden des Befestigungsschlittens 15 mit der Befestigungsschiene 21, wird die Zahnseide 18 gespannt. Die Spannung der Zahnseide ist derart festgelegt, dass eine ideale Reinigung der Zahnzwischenräume erfolgen kann.

Die Zahnseide 18 ist gemäß Figur 3 fest mit den Schenkeln 19 verbunden, wobei jeweils ein Ende der Zahnseide 18 in einen Schenkel 19 gegossen ist. Alternativ kann die Zahnseide 18, wie gemäß der Figur 2 dargestellt, durch das Befestigungselement an der Halterung 12 befestigt sein, so dass diese bei Bedarf jederzeit getauscht werden kann. Um die Zahnseide 18 gemäß der Figur 3 an dem Zahnreinigungssystem 2 zu wechseln, wird die Halterung 12 von dem Zahnreinigungssystem 2 entfernt und eine neue, nicht dargestellte Halterung, erneut mit dem Grundkörper 1 verbunden.

Das Befestigungssystem 14 des Zahnreinigungssystems 2 wird zusätzlich durch eine Verriegelung 27 gesichert, welche in der Figur 3 lediglich schematisch angedeutet ist. Die Verriegelung 27 kann zum Beispiel mit einem Magneten, einer Schnappverbindung oder einem Druckknopf ausgebildet sein.

Ferner ist an dem Zahnreinigungssystem 2 ein Sicherungselement 28 angebracht, welches die Halterung 12 und/oder den Grundkörper 1 vor Verschlucken sichert. Das Sicherungselement 28 ist als Faden ausgebildet, welcher an der Hand befestigt werden kann und an der Halterung 12 und/oder dem Grundkörper 1 befestigt ist.

Die Figur 4 zeigt das Zahnreinigungssystem 2 in einer perspektivischen Darstellung. Der Grundkörper 1 und die Halterung 12 sind durch das Befestigungssystem 14 miteinander verbunden, insbesondere der Befestigungsschlitten 15 ist in die Befestigungsschiene 21 geschoben. Da die Führungsflächen 16, 23 (vgl. Fig. 1 und 2) zueinander windschief verlaufen, spreizt sich die Halterung 12 derart an dem Grundkörper 1, dass die Zahnseide 18 gespannt ist.

Die Innenfläche 5 des Grundkörpers ist konisch und polygonal ausgebildet, so dass das gesamte Zahnreinigungssystem 2 drehfest auf dem Finger gehalten ist, wenn dieses insbesondere im Mundraum angewendet wird. Vorzugsweise werden für unterschiedliche Fingerformen unterschiedliche Grö-ßen und Geometrien des Zahnreinigungssystems 2 bereitgestellt. So sind für kleine Finger auch kleinere Zahnreinigungssysteme 2 geeignet, wobei insbesondere die Aussparung 4 der Grundkörpers 1 verkleinert wird.

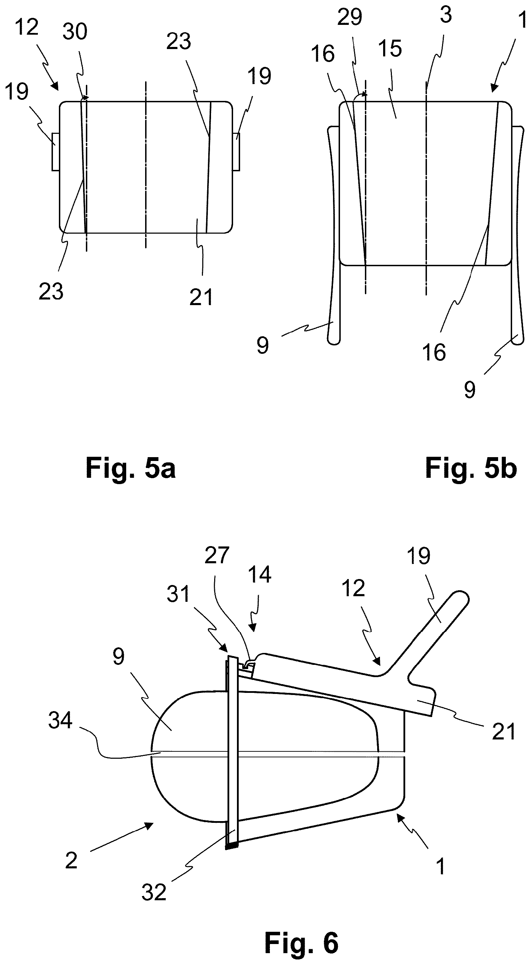

Die Figur 5a zeigt die Halterung 12 sowie deren zweite Führungsfläche 23 und die Figur 5b den Grundkörper 1 mit der ersten Führungsfläche 16. Die Geometrie der zweiten Führungsflächen 23 kann sich von der Geometrie der ersten Führungsflächen 16 unterscheiden. In diesem Fall sind die beiden Führungsflächen 16, 23 nicht parallel zueinander, insbesondere wenn die Halterung 12 derart gegenüber dem Grundkörper 1 angeordnet ist, dass die beiden Führungsflächen 16, 23 einander zugewandt sind. Es kann dadurch eine Spreizung bzw. Klemmung der Halterung 12 auf dem Grundkörper 1 erzielt werden.

Die erste Führungsfläche 16 ist, wie auch gemäß der Figur 1 beschrieben, konisch ausgebildet, wobei der Befestigungsschlitten 15 einen ersten Kegelwinkel 29 beschreibt. Die zweite Führungsfläche 23 kann ebenso konisch ausgebildet sein, jedoch bevorzugt mit einem geringeren zweiten Kegelwinkel 30. Wenn der Befestigungsschlitten 15 in die Befestigungsschiene 21 geschoben wird, spreizt die größere erste Führungsfläche 16 durch ihren grö-ßeren ersten Kegelwinkel 29 den kleineren zweiten Kegelwinkel 30 bzw. die zweite Führungsfläche auf, so dass die Zahnseide 18 (vgl. Fig. 3, 4, 7, 9) gespannt ist.

Einer der Kegelwinkel 29, 30 kann dabei gleich Null sein, so dass die Führungsfläche im Wesentlichen gerade ist.

Die Figur 6 zeigt das Zahnreinigungssystem 2 in einer Seitenansicht, welches mit einem Justiermechanismus 31 ausgestattet ist. Der Justiermechanismus 31 ist gemäß der Figur 6 als eine größenverstellbare Rohrschelle 32 ausgebildet, um den Durchmesser der Aussparung 4 zu variieren. Indem die Rohrschelle 32 fixiert wird, verkleinert sich die Aussparung 4 des Grundkörpers 1, so dass das Zahnreinigungssystem 2 für kleinere Finger geeignet ist. Um die Verkleinerung des Grundkörpers 1 zu erleichtern ist er mit einem Schlitz 34 versehen. Durch eine stärkere Spannung der Rohrschelle 32 kann der Grundkörper 1 in seinem Durchmesser verkleinert werden.

Neben dem Justiermechanismus 31 zeigt die Figur 6, dass die Schenkel 19 der Halterung 12 schräg zu deren Befestigungsschiene 21 bzw. zur Längsachse 3 des Grundkörpers 1 angeordnet sind.

In Figur 6 ist weiterhin eine andere Verriegelung 27 für die Halterung 12 an dem Grundkörper skizziert dargestellt. Es handelt sich hierbei um eine kleine Lasche, die in eine Vertiefung des Grundkörpers 1 einrastet. Ein versehentliches Lösen der Verbindung zwischen Grundkörper 1 und Halterung 12 wird damit vermieden. Zum Lösen der Verbindung kann vorgesehen werden, dass die Lasche an einer Sollbruchstelle bricht, um kenntlich zu machen, dass die Zahnseide bereits gebraucht ist und kein weiteres Mal verwendet werden sollte.

In Figur 7 ist dargestellt, dass der Grundkörper 1 und die Halterung 12 einteilig zum Zahnreinigungssystem 2 miteinander verbunden sind. Das Zahnreinigungssystem 2 weist damit kein Befestigungssystem 14 gemäß den vorherigen Figuren auf. Um bei einem Wechsel der Zahnseide 18 nicht das gesamte Zahnreinigungssystem 2 austauschen zu müssen, kann das Zahnreinigungssystem 2 ein Befestigungselement 22 gemäß der Figur 2 aufweisen.

Das Befestigungselement 22 erlaubt es, lediglich die Zahnseide 18 zu wechseln.

Ferner ist in der Aussparung 4 eine alternative Ausführung des Justiermechanismus ausgebildet, welche gemäß der Figur 7 ein Ringeinsatz 33 ist.

Der Ringeinsatz 33 ist separat ausgebildet und kann in die Aussparung gesteckt werden, um diese zu verkleinern. Das Zahnreinigungssystem 2 ist auf diese Weise einfach an unterschiedliche Fingerformen und -größen anpassbar.

Die Figur 8 zeigt den Grundkörper 1 gemäß einer alternativen Ausführungsform, wobei der Grundkörper 1 U-förmig ausgebildet ist. Der Grundkörper 1 weist eine dritte Aussparungsöffnung 8 auf, die im Bereich des Befestigungsschlittens 15 angeordnet ist. Ebenso ist es denkbar, dass die Aussparungsöffnung 8 an den anderen Seiten des Grundkörpers 1 angeordnet ist.

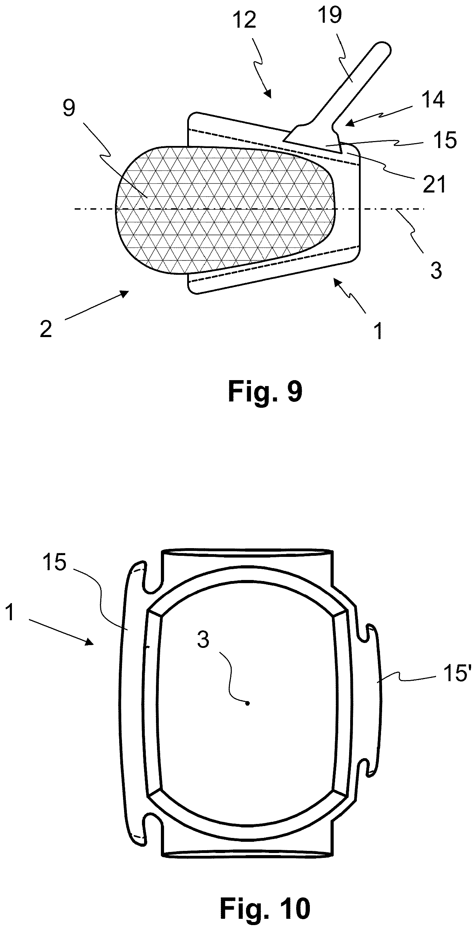

In Figur 9 ist dargestellt, dass das Befestigungssystem 14 ebenso quer zur Längsrichtung 3 des Grundkörpers ausgerichtet sein kann. Um den Befestigungsschlitten 15 und die Befestigungsschiene 21 miteinander zu verbinden, wird die Halterung 12 quer zur Längsrichtung 3 auf den Grundkörper 1 geschoben. Durch eine vorgegebene, unterschiedliche Biegung von Befestigungsschlitten 15 und Befestigungsschiene 21 in Einschieberichtung entsteht eine Vorspannung der Zahnseide 12, da sich die Schenkel 19 am ihrem Ende, an welchem die Zahnseide befestigt ist, voneinander wegbewegen (siehe Figur 2). Der Radius des Befestigungsschlittens 15 ist in entspanntem Zustand, bevor der Befestigungsschlitten 15 in die Befestigungsschiene 21 eingeschoben wird, größer als der Radius der Befestigungsschiene 21. Im Gegensatz zu den vorherigen Figuren weist der Grundkörper 1 die Befestigungsschiene 21 und die Halterung 12 den Befestigungsschlitten 15 auf. Es ist in dieser Figur 9 auch angedeutet, dass die Oberfläche der Grifffläche strukturiert, hier geriffelt, ist, um die Führung des Zahnreinigungssystems 2 zu verbessern.

Figur 10 zeigt einen Grundkörper 1 ähnlich der Figur 1. Unterschiedlich ist nur, dass ein zweiter Befestigungsschlitten 15' zusätzlich zu dem Befestigungsschlitten 15 angeordnet ist. Der zweite Befestigungsschlitten 15' ist hier kleiner dimensioniert und eignet sich daher für die Aufnahme einer kleineren Halterung gemäß Figur 2. Selbstverständlich kann auch eine zweite Aufnahme ähnlich der Ausführung gemäß Figur 9 quer zur Längsrichtung 3 des Grundkörpers 1 angeordnet sein oder auch eine Kombination von beiden Arten der Aufnahme.

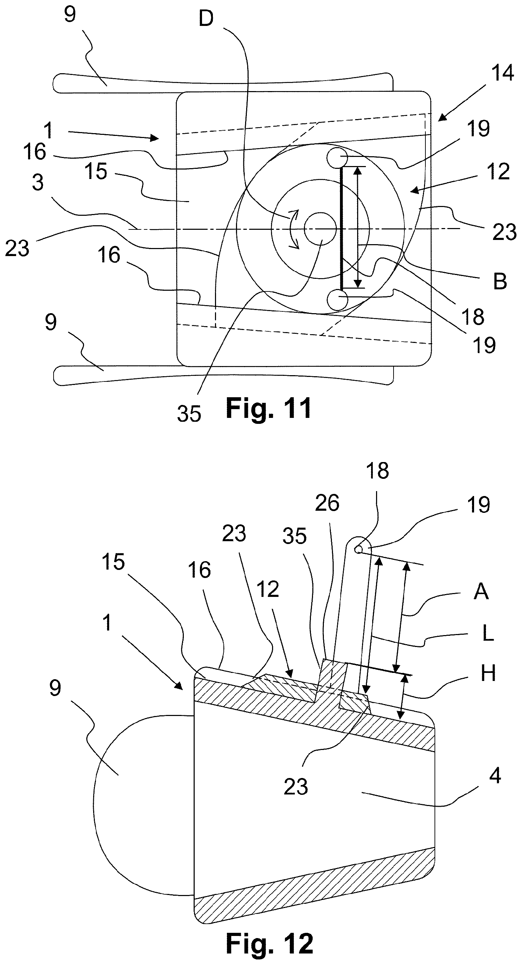

In Figur 11 ist eine Draufsicht auf ein Zahnreinigungssystem gemäß einem weiteren Ausführungsbeispiel dargestellt. In dieser Draufsicht ist der Grundkörper 1 mit den beiden ersten Griffflächen 9 gezeigt. An dem Grundkörper 1 ist der Befestigungsschlitten 15 sowie die erste Führungsfläche 16 des Befestigungssystems 14 angeordnet. Während bei den vorherigen Ausführungsbeispielen die Halterung 12 mittels einer linearen Bewegung mit dem Grundkörper 1 verbunden wurde, ist bei diesem Ausführungsbeispiel eine Drehbewegung erforderlich, um die Halterung 12 an dem Grundkörper 1 zu befestigen. Die Halterung 12 weist wiederum zwei Schenkel 19 auf, an denen die Zahnseide 18 befestigt ist. Zum Einsetzen der Halterung 12 in den Grundkörper 1 wird die Halterung 12 in Doppelpfeilrichtung D um etwa 90° gegenüber der hier gezeigten Darstellung nach rechts gedreht und auf einen Zentrierstift 35 des Grundkörpers 1 aufgesteckt. Anschließend wird die Halterung 12 um den Zentrierstift 35 und auf dem Befestigungsschlitten 15 wieder in Doppelpfeilrichtung D um etwa 90° nach links gedreht und klemmt beispielsweise in einer Schwalbenschwanznut der ersten Führungsflächen 16.

Die zweite Führungsfläche 23 der Halterung 12 korrespondiert dabei mit der ersten Führungsfläche 16 des Grundkörpers 1.

Durch diese Befestigung der Halterung 12 auf dem Grundkörper 1 wird entweder die Halterung 12 so verbogen, dass die Schenkel 19 an ihren oberen Enden etwas gespreizt werden, wodurch die Zahnseide 18 über ihre wirksame Länge B gespannt wird. Alternativ kann auch lediglich der Bereich, an welchem die Schenkel 19 an der Halterung 12 befestigt sind gegenüber der Halterung 12 elastisch verformt werden und ebenfalls durch entsprechende Führungsflächen die Schenkel 19 spreizen. Die für die Reinigung des Zahnzwischenraums wirksame Länge B der Zahnseide 18 befindet sich auch hierbei in dem Zwischenraum zwischen den beiden Schenkeln 19 und wird somit gespannt.

Figur 12 zeigt einen Schnitt durch eine Seitenansicht des Zahnreinigungssystems ähnlich der Figur 11. Hier ist wieder der Zentrierstift 35 zu sehen, welcher Teil des Grundkörpers 1 ist. Selbstverständlich könnte auch umgekehrt der Zentrierstift 35 Teil der Halterung 12 sein und in eine Öffnung des Grundkörpers 1 eingeführt werden. Die erste Führungsfläche 16 und die zweite Führungsfläche 23 wirken zusammen, so dass die Halterung 12 auf dem Grundkörper 1 festgelegt wird. An der Halterung 12 ist in dieser Schnittdarstellung einer der beiden Schenkel 19 sowie ein Schnitt durch die Zahnseide 18 zu sehen.

Der Zentrierstift 35 ragt mit einer Höhe H über die Oberseite der zweiten Führungsfläche 23 der Halterung 12 hinaus, wodurch der Abstand A zwischen dem Zentrierstift 35 und der Zahnseide 18 bestimmt wird. Dieser Abstand A ist geringer als der Abstand zwischen der Zahnseide 18 und der Oberseite der Halterung 12 wäre, an welcher der Zahn ohne Anschlag 26 anschlagen würde. Der Abstand A bildet somit ein Maß, wie weit die Zahnseide in den Zahnzwischenraum eindringen kann. Beim Einführen der Zahnseide 18 in einen Zahnzwischenraum stößt der Anschlag 26 an der Oberseite des Zahns an und begrenzt damit die Eindringtiefe der Zahnseide 18. Je nach individuellem Kiefer des Benutzers kann hierdurch mittels verschiedener Grundkörper 1 mit unterschiedlich langen Zentrierstiften 35 der Abstand A individuell angepasst werden. Alternativ ist es auch möglich unterschiedliche Halterungen 12 zur Verfügung zu stellen, bei welchen die Schenkel 19 eine unterschiedliche Länge L aufweisen. Die Länge L der Schenkel 19 sei hier festgelegt als Abstand zwischen der Zahnseide 18 und der Befestigung des Schenkels 19 an der Halterung 12 bzw. gemäß anderer Ausführungsbeispiele an dem Grundkörper 1. Auch hierdurch wird der Abstand A gegenüber einem Anschlag 26 des Zentrierstifts 35 oder der Oberseite der Halterung 12 im Bereich der beiden Schenkel 19 individuell auf die Bedürfnisse des Anwenders eingestellt.

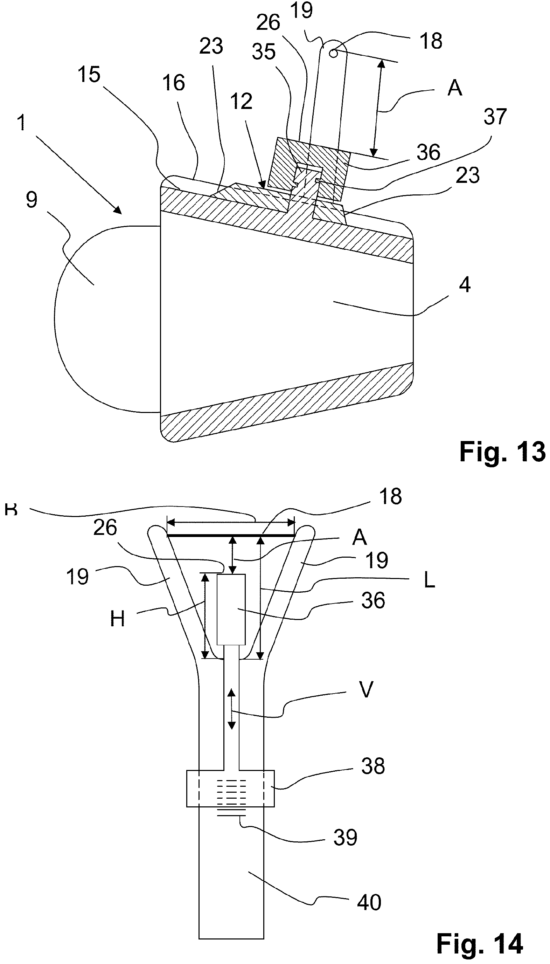

In dem Ausführungsbeispiel der Figur 13, welche einen Schnitt durch eine Seitenansicht des Zahnreinigungssystems ähnlich der Figur 11 zeigt, ist der Anschlag 26 durch ein Anschlagstück 36 gebildet. Das Anschlagstück 36 ist auf den Zentrierstift 35 aufgesteckt und bestimmt dort den Abstand A des Anschlags 26 von der Zahnseide 18.

In diesem Ausführungsbeispiel kann die Höhe H des Anschlagstücks 36 in der Höhe gegenüber der Zahnseide 18 eingestellt werden. Dies kann entweder durch verschiedene Rasten erfolgen, wobei das Anschlagstück 36 mehr oder weniger tief auf den Zentrierstift 35 aufgesteckt wird. Alternativ ist es auch möglich, so wie hier dargestellt, dass ein Gewinde 37 oder eine entsprechende Schräge vorhanden ist. Hierbei wird das Anschlagstück 36 auf den Zentrierstift 35 aufgedreht und verändert dadurch die Höhe H gegenüber der Oberseite der Halterung 12 bzw. den Abstand A zur Zahnseide 18. Auch hier besteht in einer weiteren Alternative die Möglichkeit, dass die Schenkel 19 der Halterung 12 längenveränderlich ausgebildet sind und beispielsweise mittels teleskopartiger Verschiebung mehr oder weniger lang werden und hierdurch den Abstand A beeinflussen.

Figur 14 zeigt eine Draufsicht auf ein Zahnreinigungssystem mit einem Griff 40 gemäß einem weiteren Ausführungsbeispiel. Es handelt sich hierbei um ein herkömmliches Zahnreinigungssystem mit einem Griff 40 und zwei gabelförmig ausgebildeten Schenkeln 19, zwischen denen die Zahnseide 18 aufgespannt ist. Der Anschlag 26 mit einem Anschlagstück 36 für einen Zahn ist dabei an einem Verschiebeteil 38 befestigt. Das Verschiebeteil 38 ist entsprechend der Richtung des Doppelpfeils V verschiebbar. Hierdurch wird der Abstand A zwischen Zahnseide 18 und Anschlag 26 bzw. die Höhe H zwischen Oberseite des Anschlagstücks 36 und der tiefsten Stelle des Griffes 40 zwischen den Schenkeln 19, an der ein Zahn anschlagen würde, festgelegt.. Zur Beibehaltung des gewählten Abstands A weist der Griff 40 Rasten 39 auf, welche mit dem Verschiebeteil 38 korrespondieren. Die Verschiebung des Verschiebeteils 38 erfordert somit einen gewissen Kraftaufwand, welcher verhindert, dass der Abstand A versehentlich verändert wird. Alternativ kann auch die wirksame Länge L der Schenkel 19 verändert werden, beispielsweise durch eine nicht dargestellte teleskopartige Ausbildung der Schenkel 19.

Um weniger Kunststoffe zu verwenden und damit die Umwelt weniger zu belasten, kann vorgesehen werden, dass die Halterung 12 und/oder der Grundkörper 1 und/oder der Anschlag 26 aus einem nachwachsenden und insbesondere verzehrbaren Rohstoff hergestellt ist. Damit wird auch bei einem versehentlichen Verschlucken die Gefahr einer Verletzung des Benutzers vermieden. Wenn darüber hinaus auch vorgesehen ist, dass beispielsweise für die Anwendung bei Kindern geschmacklich wohlschmeckendes Material verwendet wird, so kann damit ein Anreiz zur Anwendung des Zahnreinigungssystems geschaffen werden. Der Benutzer kann nach der Reinigung des Zahnzwischenraums das Zahnreinigungssystem oder zumindest Teile davon essen. Ebenso ist es vorteilhaft, wenn das Material des Zahnreinigungssystems bio-kompostierbar ist. Dies trägt zu einer deutlichen Reduzierung von Kunststoffabfällen bei.

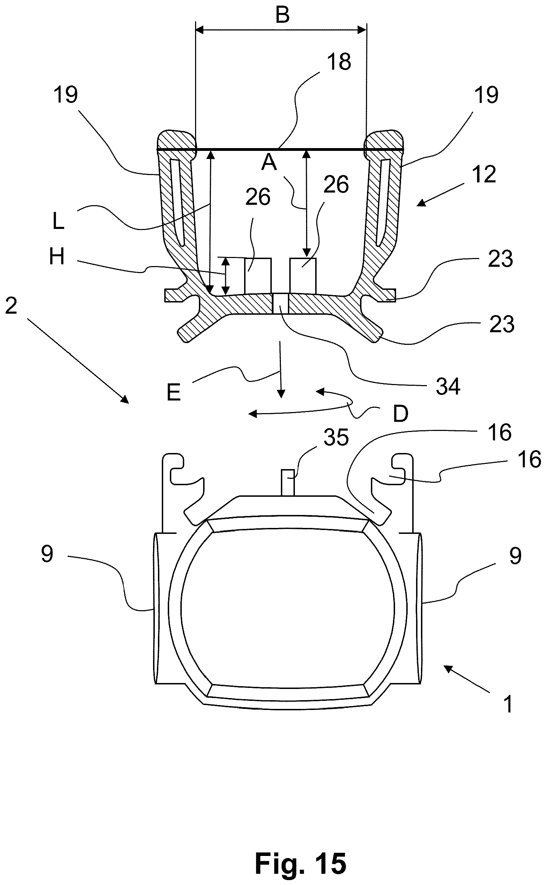

Figur 15 zeigt eine Seitenansicht des Zahnreinigungssystems 2 gemäß einer alternativen zweiteiligen Ausführungsform. Das Zahnreinigungssystem 2 weist den Grundkörper 1 und die Halterung 12 auf. Die Halterung 12 kann mit dem Grundkörper 1 verbunden werden, in dem sie in Einführrichtung E auf den Grundkörper 1 aufgesetzt und anschließend in Drehrichtung D gedreht wird. Hierdurch verriegelt ein 2-teiliges Befestigungssystem, bei welchem zwei erste Führungsflächen 16 und zwei zweite Führungsflächen 23 auf jeder Seite der Halterung 12 miteinander verbunden werden. Während die erste, untere Führungsfläche 16 mit der zweiten, unteren Führungsfläche 23 einen festen Zusammenhalt zwischen Halterung 12 und Grundkörper 1 bewirken, bewirken die oberen Führungsflächen 16 und 23, dass die Schenkel 19 gespreizt werden und damit die Zahnseide 18 spannen.

Bei diesem Ausführungsbeispiel ist weiterhin ersichtlich, dass zwei Anschläge 26 an der Halterung 12 angeordnet sind. Hierdurch wird ein Abstand A für das Zahnreinigungssystem 2 geschaffen, sodass die Zahnseide 18 nicht in das Zahnfleisch einschneiden kann, da sie gestoppt wird, sobald die Anschläge 26 auf der Zahnoberfläche auftreffen. Der Abstand A kann durch die Höhe H der Anschläge 26 bestimmt werden bzw. durch die wirksame Länge L der Schenkel 19.

Die Halterung 12, welche in diesem Ausführungsbeispiel im Schnitt dargestellt ist, zeigt auf, dass die Schenkel 19 verstärkt ausgeführt sind. Dementsprechend weisen sie zwei im Wesentlichen parallel verlaufende Abschnitte auf, welche einerseits die Herstellung erleichtern und andererseits eine zusätzliche Stabilität für die Befestigung und Spannung der Zahnseide 18 schaffen.

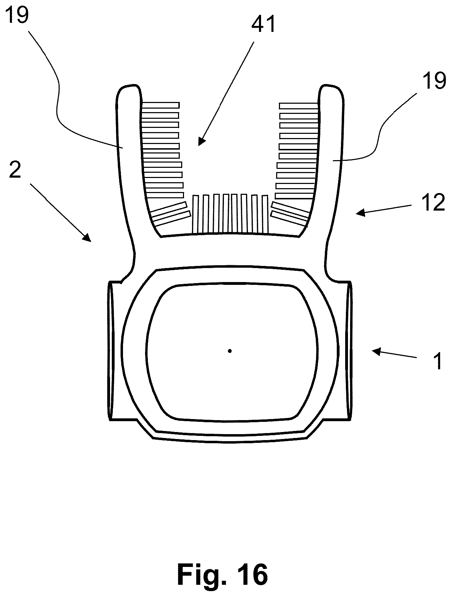

In Figur 16 ist eine Seitenansicht des Zahnreinigungssystems 2 gemäß einer alternativen einteiligen Ausführungsform gezeigt. Bei dieser Ausführung ist an den Schenkeln 19 sowie an dem Zwischenraum zwischen den beiden Schenkeln 19 an der Halterung 12 eine Zahnbürste 41 angeordnet. Die Zahnbürste 41 kann ähnlich wie bei der Zahnseide 18 durch die Halterung 12 und den Grundkörper 1 optimal mit den Fingern geführt werden. Hierdurch wird ein sehr positiver Reinigungseffekt erzielt.

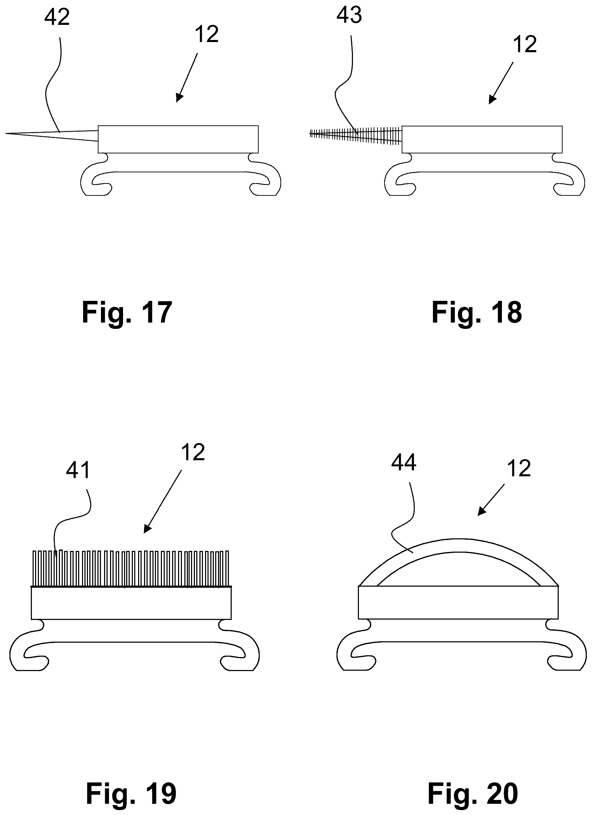

Die Figuren 17 bis 20 zeigen Seitenansichten verschiedener Zahnreinigungselemente an jeweils einer Halterung 12. In Figur 17 ist an der Halterung 12 ein Zahnstocher 42 angeordnet. Figur 18 weist an der Halterung 12 eine Interdentalbürste 43 auf. Die Anordnung der Zahnreinigungselemente kann anders als hier dargestellt auch an der Oberseite oder der anderen Seite der Halterung 12 sein. Auch kann der Winkel der Anordnung nicht wie hier dargestellt 90°, sondern ein spitzer oder ein stumpfer Winkel sein.

In Figur 19 ist eine im Vergleich zu Figur 16 abgeänderte Art der Zahnbürste 41 dargestellt. In Figur 20 ist an der Halterung 12 ein Zungenreiniger 44 befestigt. Der Zungenreiniger 44 kann eine raue Oberfläche aufweisen.

Die hier gezeigten Halterungen 12 sind jeweils mit einem Grundkörper 1 kombinierbar. Selbstverständlich ist es auch möglich, dass diese Zahnreinigungselemente in einer einteiligen Form des Zahnreinigungssystems 2 angeordnet sind.

Die vorliegende Erfindung ist nicht auf die dargestellten und beschriebenen Ausführungsbeispiele beschränkt. Abwandlungen im Rahmen der Patentansprüche, beispielsweise durch die Anordnung des Anschlags an den Schenkeln oder an dem Grundkörper sind ebenso möglich wie eine Kombination der Merkmale, auch wenn diese in unterschiedlichen Ausführungsbeispielen dargestellt und beschrieben sind. So ist es insbesondere auch möglich den Winkel zwischen dem Griff bzw. dem Grundkörper und den Schenkeln, an welchen die Zahnseide befestigt ist, je nach Bedarf unterschiedlich festzulegen. Wichtig ist lediglich, dass der Anschlag derart angeordnet ist, dass er eine Verletzung des Zahnfleisches verhindern kann. Im Übrigen ist es selbstverständlich auch möglich, dass die Erfindung oder Teile davon sowohl an manuell verwendeten Zahnreinigungssystemen verwendet wird, als auch an Zahnbürsten, elektrischen Zahnbürsten, elektrischen Zahnreinigungssystemen oder Interdentalbürsten.

### Bezugszeichenliste

- 1: Grundkörper
- 2: Zahnreinigungssystem
- 3: Längsrichtung
- 4: Aussparung
- 5: Innenfläche
- 6: Erste Aussparungsöffnung
- 7: Zweite Aussparungsöffnung
- 8: Dritte Aussparungsöffnung
- 9: erste Grifffläche
- 10: zweite Grifffläche
- 11: Schlitz
- 12: Halterung
- 13: erster Teil
- 14: Befestigungssystem
- 15: Befestigungsschlitten
- 16: erste Führungsfläche
- 17: Linie
- 18: Zahnseide
- 19: Schenkel
- 20: zweiter Teil
- 21: Befestigungsschiene
- 22: Befestigungselement
- 23: zweite Führungsfläche
- 24: Feder
- 25: Innenseite
- 26: Anschlag
- 27: Verriegelung
- 28: Sicherungselement
- 29: Erster Kegelwinkel
- 30: Zweiter Kegelwinkel
- 31: Justiermechanismus
- 32: Rohrschelle
- 33: Ringeinsatz
- 34: Zentrieröffnung

- 35: Zentrierstift
- 36: Anschlagstück
- 37: Gewinde
- 38: Verschiebeteil
- 39: Rasten
- 40: Griff
- 41: Zahnbürste
- 42: Zahnstocher
- 43: Interdentalbürste
- 44: Zungenreiniger

- A: Abstand
- D: Doppelpfeil Drehrichtung
- E: Einführrichtung
- V: Doppelpfeil Verschieberichtung
- r: kleiner Radius
- R: großer Radius
- B: wirksame Länge der Zahnseide
- H: Höhe
- L: Länge des Schenkels

## Patentansprüche

1. Zahnreinigungssystem (2) mit einer Halterung (12) für Zahnseide (18), die zwei voneinander beabstandete Schenkel (19) und eine zwischen den beiden Schenkeln (19) gehaltene Zahnseide (18) aufweist,
und mit einem ringförmigen Grundkörper (1) zum Aufschieben auf einen Finger, welcher eine in Längsrichtung (3) des Grundkörpers (1) angeordnete Aussparung (4) zur Aufnahme einer Fingerspitze aufweist,
wobei sich die Schenkel (19) im Wesentlichen quer zur Längsrichtung (3) des Grundkörpers (1) erstrecken,
wobei sich die Längsrichtung (3) des Grundkörpers (1) durch den Mittelpunkt der Aussparung von einer ersten Aussparungsöffnung bis zu einer zweiten Aussparungsöffnung, durch welche der Finger in die Aussparung (4) geführt werden kann, erstreckt,
wobei die Aussparung (4) konisch ausgebildet ist, so dass das Zahnreinigungssystem (2) drehfest auf dem Finger gehalten werden kann, wobei an zwei sich gegenüberliegenden Seiten des Grundkörpers (1) jeweils eine erste Grifffläche (9) angeordnet ist, die zur Bewegungssteuerung der Zahnseide (18) im Mund mit den zum Grundkörper (1) benachbarten Fingern vorgesehen ist und
wobei die beiden ersten Griffflächen (9) jeweils eine flügelartige Fläche bilden, welche den Grundkörper (1) überragt.

2. Zahnreinigungssystem (2) nach dem vorherigen Anspruch, **dadurch gekennzeichnet, dass** an der den Schenkeln (19) gegenüberliegenden Seite des Grundkörpers (1) eine weitere zweite Grifffläche (10) zur Bewegungssteuerung der Zahnseide (18) im Mund mit dem Daumen vorgesehen ist und/oder dass die zweite Grifffläche (10) eine insbesondere flügelartige und den Grundkörper (1) überragende Fläche bildet und/oder zumindest eine der Griffflächen (9, 10) eine griffige, insbesondere gewölbte, gelochte und/oder geriffelte, Oberfläche aufweist.

3. Zahnreinigungssystem (2) nach einem oder mehreren der vorherigen Ansprüche, **dadurch gekennzeichnet, dass** die Halterung (12) und der Grundkörper (1) ein- oder mehrteilig ausgebildet sind, wobei bei einer mehrteiligen Ausführung ein Befestigungssystem (14) die Halterung (12) und den Grundkörper (1) miteinander verbindet.

4. Zahnreinigungssystem (2) nach einem oder mehreren der vorherigen Ansprüche, **dadurch gekennzeichnet, dass** der Grundkörper (1) einen Schlitz (11) aufweist, insbesondere zur Aufnahme der Halterung (12) und/oder zur Anpassung an verschiedene Fingergrößen.

5. Grundkörper (1) für ein Zahnreinigungssystem (2) gemäß einem der vorherigen Ansprüche, der ringförmig ausgebildet ist, zum Aufschieben auf einen Finger, und der eine in Längsrichtung (3) des Grundkörpers (1) angeordnete Aussparung (4) zur Aufnahme einer Fingerspitze aufweist,
wobei sich die Längsrichtung (3) des Grundkörpers (1) durch den Mittelpunkt der Aussparung (4) von einer ersten Aussparungsöffnung bis zu einer zweiten Aussparungsöffnung, durch welche der Finger in die Aussparung (4) geführt werden kann, erstreckt,
wobei die Aussparung (4) konisch ausgebildet ist, so dass das Zahnreinigungssystem (2) drehfest auf dem Finger gehalten werden kann, wobei an zwei sich gegenüberliegenden Seiten des Grundkörpers (1) jeweils eine erste Grifffläche (9) angeordnet ist, die zur Bewegungssteuerung von Zahnreinigungselementen, insbesondere Zahnseide (18), im Mund mit den zum Grundkörper (1) benachbarten Fingern vorgesehen ist und
wobei die beiden ersten Griffflächen (9) jeweils eine flügelartige Fläche bilden, welche den Grundkörper 1 überragt.

6. Grundkörper (1) nach dem vorherigen Anspruch, **dadurch gekennzeichnet, dass** zwischen den beiden seitlichen Griffflächen (9) eine weitere zweite Grifffläche (10) zur Bewegungssteuerung der Zahnseide (18) im Mund mit dem Zeigefinger vorgesehen ist und/oder dass zumindest die beiden seitlichen Griffflächen (9) eine insbesondere flügelartige und/oder den Grundkörper (1) überragende Fläche bilden.

7. Grundkörper (1) nach einem oder mehreren der vorherigen Ansprüche 5 bis 6, **dadurch gekennzeichnet, dass** die Aussparung (4) abgeflacht ausgebildet ist, so dass das Zahnreinigungssystem (2) drehfest auf dem Finger gehalten werden kann.

8. Grundkörper (1) nach einem oder mehreren der vorherigen Ansprüche 5 bis 7, **dadurch gekennzeichnet, dass** der Grundkörper (1) einen Schlitz (11) aufweist, insbesondere zur Aufnahme der Halterung (12) und/oder zur Anpassung an verschiedene Fingergrößen und/oder dass der Grundkörper (1) als an seinem Umfang geschlossener oder geöffneter Ring ausgebildet ist.

9. Verwendung einer Halterung (12) mit einem Befestigungssystem (14) zum Verbinden der Halterung (12) mit dem Grundkörper (1) gemäß einem der Ansprüche 5 bis 8,
wobei die Halterung (12) zumindest ein Zahnreinigungselement zum Reinigen der Zahnoberflächen oder der Zahnzwischenräume aufweist, wie insbesondere Zahnseide, Zahnstocher, Interdentalbürste, Zahnbürste.

10. Verwendung gemäß Anspruch 9, **dadurch gekennzeichnet, dass** die Halterung (12) einen zweiten Teil (20) des form- und/oder kraftschlüssigen Befestigungssystems (14), insbesondere einen Befestigungsschlitten (15) oder eine Befestigungsschiene (21) zur Aufnahme in einem Grundkörper (1) des Zahnreinigungssystems (2) und/oder einen Teil einer Magnet, Schraub-, Steck-, Dreh-, Klebe-, Klettverbindung und/oder einen Teil einer Schnappverbindung, zur Verbindung der Halterung (12) mit dem Grundkörper (1) des Zahnreinigungssystems aufweist.

## Claims

1. A dental cleaning system (2) comprising a holder (12) for dental floss (18), which includes two mutually spaced brackets (19) and a dental floss (18) held between the two brackets (19),
and comprising an annular, base body (1) to be slid onto a finger, which includes a recess (4) situated in the longitudinal direction (3) of the base body (1) for accommodating a fingertip,
wherein the brackets (19) extend essentially transversely with respect to the longitudinal direction (3) of the base body (1),
wherein the longitudinal direction (3) of the base body (1) extends through the center of the recess from a first recess opening to a second recess opening through which the finger can be guided into the recess (4),
wherein the recess (4) is conical such that the dental cleaning system (2) can be held on the finger in a rotationally fixed manner, wherein a first grip surface (9) is situated on each of the two opposite sides of the base body (1), which is provided for controlling the movement of the dental floss (18) in the mouth with the aid of the fingers adjacent to the base body (1) and
wherein the two first grip surfaces (9) each form a wing-like surface, which projects beyond the base body (1).

2. The dental cleaning system (2) as claimed in the preceding claim, **characterized in that** a further second grip surface (10) for controlling the movement of the dental floss (18) in the mouth with the aid of the thumb is provided on the side of the base body (1) opposite to the brackets (19) and/or that the second grip surfaces (10) forms a surface which is, in particular, wing-like and projects over the base body (1) and/or at least one of the grip surfaces (9, 10) includes a non-slip, in particular, curved, perforated, and/or ribbed surface..

3. The dental cleaning system (2) as claimed in one or several of the preceding claims, **characterized in that** the holder (12) and the base body (1) are designed as one piece or multi-pieced, wherein, in a multi-pieced design, a fastening system (14) connects the holder (12) and the base body (1) to one another.

4. The dental cleaning system (2) as claimed in one or several of the preceding claims, **characterized in that** the base body (1) includes a slot (11), in particular, for accommodating the holder (12) and/or for adaptation to different finger sizes.

5. A base body (1) for a dental cleaning system (2), as claimed in one of the preceding claims, which is designed, annular in order to be slid onto a finger, and which comprises a recess (4) situated in the longitudinal direction (3) of the base body (1) for accommodating a fingertip,
wherein the longitudinal direction (3) of the base body (1) extends through the center of the recess from a first recess opening to a second recess opening through which the finger can be guided into the recess (4),
wherein the recess (4) is conical such that the dental cleaning system (2) can be held on the finger in a rotationally fixed manner,
wherein a first grip surface (9) is situated on each of the two opposite sides of the base body (1), which is provided for controlling the movement of the dental floss (18), in the mouth with the aid of the fingers adjacent to the base body (1) and
wherein the two first grip surfaces (9) each form a wing-like surface, which projects beyond the base body (1).

6. The base body (1) as claimed in the preceding claim, **characterized in that** a further second grip surface (10) for controlling the movement of the dental floss (18) in the mouth with the aid of the index finger is provided between the two lateral grip surfaces (9) and/or that at least the two lateral grip surfaces (9) form a surface which is, in particular, wing-like and/or projects over the base body (1).

7. The base body (1) as claimed in one or several of preceding claims 5 to 6, **characterized in that** the recess (4) is designed to be flattened, such that the dental cleaning system (2) can be held on the finger in a rotatably fixed manner.

8. The base body (1) as claimed in one or several of the preceding claims 5 to 7, **characterized in that** the base body (1) includes a slot (11), in particular, for accommodating the holder (12) and/or for adaptation to different finger sizes and/or that the base body (1) is designed, on its periphery, as a closed or open ring.

9. Use of a holder (12) comprising a fastening system (14) for connecting the holder (12) to the base body (1) as claimed in one of claims 5 to 8, wherein the holder (12) comprises at least one dental cleaning element for cleaning the tooth surfaces or the interdental spaces, such as, in particular, dental floss, a toothpick, an interdental brush, a toothbrush.

10. Use as claimed in claim 9, **characterized in that** the holder (12) comprises a second part (20) of the form-locking and/or force-locked fastening system (14), in particular, a fastening carriage (15) or a fastening rail (21), to be accommodated in a base body (1) of the dental cleaning system (2) and/or a part of a magnetic, threaded, plug-in, rotary, adhesive, hook and loop connection and/or a part of a snap-in connection for connecting the holder (12) to a base body (1) of the dental cleaning system.

## Revendications

1. Système de nettoyage dentaire (2) avec un support (12) pour fil dentaire (18), qui présente deux branches (19) distantes l'une de l'autre et un fil dentaire (18) maintenu entre les deux branches (19),
et avec un corps de base annulaire (1) à enfiler sur un doigt, qui présente un évidement (4) disposé dans le sens longitudinal (3) du corps de base (1) pour recevoir un bout de doigt,
dans lequel les branches (19) s'étendent sensiblement transversalement au sens longitudinal (3) du corps de base (1),
dans lequel le sens longitudinal (3) du corps de base (1) s'étend par le centre de l'évidement depuis une première ouverture d'évidement jusqu'à une deuxième ouverture d'évidement à travers laquelle le doigt peut être guidé dans l'évidement (4),
dans lequel l'évidement (4) se présente sous une forme conique, de sorte que le système de nettoyage dentaire (2) peut être maintenu sur le doigt de manière résistante à la rotation,
dans lequel une première surface de préhension (9) est disposée respectivement sur deux côtés opposés du corps de base (1), laquelle est prévue pour la commande du mouvement du fil dentaire (18) dans la bouche à l'aide des doigts voisins du corps de base (1) et
dans lequel les deux premières surfaces de préhension (9) forment chacune une surface en forme d'aile qui dépasse du corps de base (1).

2. Système de nettoyage dentaire (2) selon la revendication précédente, caractérisé en ce qu'une deuxième surface de préhension supplémentaire (10) est prévue sur le côté du corps de base (1) opposé aux branches (19) pour la commande du mouvement du fil dentaire (18) dans la bouche à l'aide du pouce et/ou en ce que la deuxième surface de préhension (10) forme une surface en particulier en forme d'aile et dépassant du corps de base (1) et/ou en ce qu'au moins l'une des surfaces de préhension (9, 10) présente une surface antidérapante, en particulier bombée, perforée et/ou cannelée.

3. Système de nettoyage dentaire (2) selon l'une quelconque ou plusieurs des revendications précédentes, **caractérisé en ce que** le support (12) et le corps de base (1) sont réalisés en une ou plusieurs parties, un système de fixation (14) reliant le support (12) et le corps de base (1) dans le cas d'une réalisation en plusieurs parties.

4. Système de nettoyage dentaire (2) selon l'une quelconque ou plusieurs des revendications précédentes, **caractérisé en ce que** le corps de base (1) présente une fente (11), en particulier pour recevoir le support (12) et/ou pour s'adapter à différentes tailles de doigts.

5. Corps de base (1) pour un système de nettoyage dentaire (2) selon l'une quelconque des revendications précédentes, qui est réalisé sous forme annulaire, pour être enfilé sur un doigt, et qui présente un évidement (4) disposé dans le sens longitudinal (3) du corps de base (1) pour recevoir un bout de doigt,
dans lequel le sens longitudinal (3) du corps de base (1) s'étend par le centre de l'évidement (4) depuis une première ouverture d'évidement jusqu'à une deuxième ouverture d'évidement à travers laquelle le doigt peut être guidé dans l'évidement (4),
dans lequel l'évidement (4) se présente sous une forme conique, de sorte que le système de nettoyage dentaire (2) peut être maintenu sur le doigt de manière résistante à la rotation,
dans lequel une première surface de préhension (9) est disposée respectivement sur deux côtés opposés du corps de base (1), laquelle est prévue pour la commande du mouvement d'éléments de nettoyage dentaire, en particulier d'un fil dentaire (18), dans la bouche à l'aide des doigts voisins du corps de base (1) et
dans lequel les deux premières surfaces de préhension (9) forment chacune une surface en forme d'aile qui dépasse du corps de base (1).

6. Corps de base (1) selon la revendication précédente, caractérisé en ce qu'une deuxième surface de préhension (10) supplémentaire est prévue entre les deux surfaces de préhension latérales (9) pour la commande du mouvement du fil dentaire (18) dans la bouche à l'aide de l'index et/ou en ce qu'au moins les deux surfaces de préhension latérales (9) forment une surface en particulier en forme d'aile et/ou dépassant du corps de base (1).

7. Corps de base (1) selon l'une quelconque ou plusieurs des revendications 5 à 6 précédentes, **caractérisé en ce que** l'évidement (4) est réalisé sous forme aplatie, de sorte que le système de nettoyage dentaire (2) peut être maintenu sur le doigt de manière résistante à la rotation.

8. Corps de base (1) selon l'une quelconque ou plusieurs des revendications 5 à 7 précédentes, **caractérisé en ce que** le corps de base (1) présente une fente (11), en particulier pour recevoir le support (12) et/ou pour s'adapter à différentes tailles de doigts et/ou **en ce que** le corps de base (1) est réalisé sous forme d'anneau fermé ou ouvert sur sa circonférence.

9. Utilisation d'un support (12) avec un système de fixation (14) pour relier le support (12) au corps de base (1) selon l'une quelconque des revendications 5 à 8,
le support (12) présentant au moins un élément de nettoyage dentaire pour nettoyer les surfaces des dents ou les espaces interdentaires, comme en particulier un fil dentaire, un cure-dents, une brosse interdentaire, une brosse à dents.

10. Utilisation selon la revendication 9, **caractérisée en ce que** le support (12) présente une deuxième partie (20) du système de fixation (14) par complémentarité de formes et/ou de forces, en particulier un chariot de fixation (15) ou un rail de fixation (21) destiné à être reçu dans un corps de base (1) du système de nettoyage dentaire (2) et/ou une partie d'une liaison magnétique, par vissage, enfichage, rotation, collage ou agrip-pante, et/ou une partie d'une liaison par encliquetage, pour relier le support (12) au corps de base (1) du système de nettoyage dentaire.
